# EUROPEAN PATENT SPECIFICATION

(11) **EP 4 078 095 B1**
(45) Date of publication and mention of the grant of the patent: **29.01.2025**
(21) Application number: 20823848.5
(22) Date of filing: 15.12.2020
(51) Int. Cl.: G05D 1/628, G05D 1/672, G05D 105/80, G05D 107/00, G05D 109/25, H01Q 1/27, H01Q 1/22, G01S 13/88, G01S 13/86, G01S 13/524, G01C 13/00, B64U 101/35, G01F 1/002, G01S 13/58, G01F 1/663, B64U 101/30

(54) **NON-INVASIVE METHOD AND DEVICE TO MEASURE THE FLOW RATE OF A RIVER, OPEN CHANNEL OR FLUID FLOWING IN AN UNDERGROUND PIPE OR CHANNEL**
NICHT-INVASIVES VERFAHREN UND VORRICHTUNG ZUM MESSEN DER DURCHFLUSSMENGE EINES FLUSSES, EINES OFFENEN KANALS ODER EINES FLUIDS, DAS IN EINEM UNTERIRDISCHEN ROHR ODER KANAL FLIESST
PROCÉDÉ ET DISPOSITIF NON INVASIF PERMETTANT DE MESURER LE DÉBIT D'UNE RIVIÈRE, D'UN CANAL OUVERT OU D'UN FLUIDE S'ÉCOULANT DANS UN TUYAU OU DANS UN CANAL SOUTERRAIN

(30) Priority: 16.12.2019 EP 19216692
(43) Date of publication of application: 26.10.2022
(73) Proprietor: Flow-Tronic S.A., 4840 Welkenraedt (BE)
(72) Inventor: SEVAR, Jean-Marie, 4840 WELKENRAEDT (BE)
(74) Representative: AWA Benelux
(86) International application number: PCT/EP2020/086307
(87) International publication number: WO 2021/122659

(56) References cited:
- WO-A1-2016/154946
- US-A1- 2005 018 882
- US-A1- 2010 031 753
- US-A1- 2014 008 496
- US-A1- 2017 023 394
- US-A1- 2018 003 531
- US-A1- 2018 196 435
- US-A1- 2018 273 208
- US-A1- 2019 086 247
- US-A1- 2019 226 636
- US-B2- 9 341 581

## Description

### FIELD OF THE INVENTION

The invention relates to a method and device to measure the surface velocity over the whole cross section of a river, open channel or fluid flowing in an underground pipe or channel and calculate the flow rate by computing the shape and level in order to calculate the wet area and using the continuity equation Q = V*A.

More specifically, the present invention relates to a non-invasive method and device with a microwave antenna that is flown over the river or open channel, or flowing water in an underground pipe or channel.

### BACKGROUND OF THE INVENTION

Non-invasive methods for measuring the flow velocity of water in a river or fluid in an open channel or sewer, i.e. methods wherein there is no contact between the measuring apparatus and the fluid, are becoming more and more popular. Among the techniques used to measure the fluid velocity in a non-invasive way we can find acoustic methods, optical methods, laser methods and microwave methods, the last one being the most popular.

Velocity profiling to measure the fluid velocity of a river or channel has been used for very long time. A first method consists of a velocity sensor attached to a wading rod which is moved through the cross section of a river or channel by an operator. When the water level and/or water velocity is too high to safely make the profiling by an operator, the velocity sensor can be attached to a cable crane system for rivers that is spanned across the river or channel. Those methods are very time consuming and very expensive. When the cable crane system for rivers is used, it is a stationary application that can only be used at one particular site, and can't be used when heavy floating debris are carried by the river.

More recently ADCP (Acoustic Doppler Current Profiler) have been used to measure the flow rate from rivers or open channels. ADPC's are placed on a small boat or floating device that is tethered by an operator from a bridge or by a cable crane system for rivers. Those methods have the drawbacks that they are time consuming and that they can't be used when the river or channel are carrying floating parts and devices and when the rivers and channels are flooded.

In order to overcome this problem recently non-invasive devices have been used, mainly microwave radar devices that are carried by an operator from a bridge, making a surface velocity profile. This method has the drawbacks of being time consuming and has the problem that bridge piers are creating flow disturbances both ways upstream and downstream especially when the piers are collecting floating debris carried by the river or channel.

Non-contact devices have been carried by cable crane system for rivers as well, but this method has the drawback that the stability of the cable crane system for rivers is not good enough for making accurate measurements. Additionally cable crane system for rivers remain very expensive and inflexible.

Hydrologists have been trying to use drones carrying non-contact velocity measuring devices without gathering perfect results as those velocity measuring devices were not specifically built to be carried by drones.

In this respect, the document US 2018/003531 discloses an unmanned aerial vehicle for measuring a fluid parameter of a fluid flowing in a channel.

The document US 2005/0018882 discloses a system for gathering information useful to derive velocity of a free surface liquid flow wherein the system is incorporated in a helicopter.

The document US 2019/0086247 discloses a method for measuring velocity and depth of fluid flow in a channel including transmitting directed energy comprising a single energy beam slant-wise toward the surface of the fluid, the single beam allows to reduce the inaccuracies when computing the bulk flow.

### SUMMARY OF THE INVENTION

The present invention aims to provide an improved non-invasive method and device to measure the flow rate of a river, open channel or fluid flowing in an underground pipe or channel when for the last one the access to the measuring site by an operator is difficult, impossible or dangerous, or simply that complicated confined space entry needs to be avoided.

A special non-invasive flow velocity device is mounted on a drone that is precisely flown over the fluid surface to be measured, gathering the velocity readings. The velocity information is associated with the shape and level measurement to calculate the wet area and by using the continuity equation Q = V * A the flow rate is calculated.

The preferred non-invasive velocity measuring device is the microwave Radar device, but it could be any other suitable non-invasive velocity measuring technology. Drones are handy to use but induce signals, noise and errors on the measurements.

The microwave measuring devices uses the Doppler shift frequency to measure the velocity of the water surface such as laser or non-contact acoustic devices. The vibrations induced by the flying drone induce frequency peaks that need to be eliminated using (an) on-board vibration sensor(s) to detect them. In order to reduce the overall vibrations induced by the flying drone which increase the overall noise level reducing the signal to noise ratio, an anti-vibration suspension device can be used. Pitch, roll and yaw of the drone influence the measurement as well, and need to be measured with an angle sensors for accurate velocity measurements. GPS and altitude measurements might be useful but are not mandatory as drones can be setup to fly precise routes with high accuracy. A wind measuring device, preferably a non-moving part 2 or 3 axis measuring device can be used to compensate for the wind influence, but those additional measurements are useful only when the water velocity is relatively slow.

More specifically, the present invention relates to a non-invasive microwave measuring device for calculating the flow rate of a fluid, the device comprising :
- a non-invasive microwave fluid velocity measuring device using a patch antenna or horn antenna to generate a microwave signal that is transmitted at a specific elevation angle α towards the fluid surface and to receive the reflected microwave signal from the fluid surface with a doppler shift frequency;
- a drone to which is suspended the measuring device via a suspension system, said suspension system reducing vibration noise generated by the drone;
- at least one vibration sensor to identify and eliminate false velocity readings induced by the drone;
- at least one angle sensor to compensate for Pitch, Roll and Yaw from the drone that influence the fluid surface velocity measurement and determine the final angle from the measuring device (03) towards the fluid surface (16).

According to preferred embodiments of the invention, the device is further limited by one of the following features or by a suitable combination thereof:
- the non-invasive microwave fluid velocity measuring device comprises a 3D control system with three motors able to automatically reposition the non-invasive microwave measuring device in order to compensate for the Pitch, Roll and Yaw of the drone;
- the non-invasive microwave fluid velocity measuring device comprises GPS and altimeter sensors;
- the non-invasive microwave fluid velocity measuring device comprises an interface to capture GPS and altimeter data from the drone;
- a camera and light to facilitate the pilotage especially in underground pipes and channels;
- the non-invasive microwave fluid velocity measuring device comprises a recording device to record pictures or videos taken by the drone, together with fluid velocity measurements and/or GPS and altimeter datas ;
- the non-invasive microwave fluid velocity measuring device comprises a level or distance measuring device and/or a wind speed and direction measurement device;
- the suspension device comprises at least three tubes connected to each other by roads, the tubes connecting the velocity measuring device to the drone, the velocity measuring device being attached to first end of the tubes and the drone being attached to the second end of the tubes.
- the at least three tubes have different length to give an angle for the measuring device compared to the water fluid and horizontal plane of the drone, angle that is measured by the at least one angle sensor.
- elastic ropes are provided in the tubes and used to suspend the measuring device, the upper end of the elastic ropes being connected to the suspension system which is attached to the drone and the lower end of the elastic ropes being attached to the measuring device, the lower end of the elastic ropes being free from the tubes and slightly longer than the tubes.
- the elasticity of the elastic ropes is chosen to absorb the undesired vibrations, with vertical movements of the measuring device remaining insignificant.
- the suspension device comprises a rigid upper plate connected to the drone and a rigid lower plate connected to the non-invasive measuring device, both plates are connected with silent block types dampers.

The present invention also relates to a non-invasive method for measuring velocity measurement and distribution of a fluid flowing through a pipe or channel or in a river or open channel, the method using a non-invasive microwave fluid velocity measuring device suspended to a drone and comprising at least one vibration sensor, said method comprising the steps of :
- Generating microwave signals by using a patch antenna or horn antenna;
- Receiving the reflected microwave signals from the flowing fluid surface;
- Generating a number of discrete data expressed in amplitude as function of time from the generated microwave signals and the reflected microwave signals with Doppler frequency shifts;
- Transforming the spectrum of data expressed in the temporal domain into a frequency domain via a Fourier transform to fit a first Gaussian curve;
- Determining the global measured velocity (main µ) and the global velocity distribution (standard deviation σ) via the first Gaussian curve;
- Measuring the mechanical vibrations of the drone during the steps (a) and (b) of generating and receiving signals, to determine a sequence of vibration data being measured by the vibration sensor;
- Generating, from the vibration data, a number of discrete data expressed in amplitude as a function of time;
- Transforming the spectrum of vibration data expressed in the temporal domain into a frequency domain via a Fourier transform to fit a second Gaussian curve;
- Determining the measured vibration induced velocity (mean µ) and the vibration induced velocity distribution (standard deviation σ) via the second Gaussian curve;
- Applying a correction to the global measured velocity and the global velocity distribution obtained in step (e) by subtracting the measured vibration induced velocity and vibration induced velocity distribution obtained in step (j) in order to eliminate the vibrations of the drone in the calculation of velocity measurement and velocity distribution of the fluid.

According to preferred embodiments of the invention, the method is further limited by one of the following steps or by a suitable combination thereof:
- the fluid surface velocity is determined from the generated microwave signals and the reflected microwave signals Doppler frequency shifts and is compensated for Pitch, Roll and Yaw from the drone by taking into account the data measured by at least one angle sensor.

### BRIEF DESCRIPTION OF THE DRAWINGS

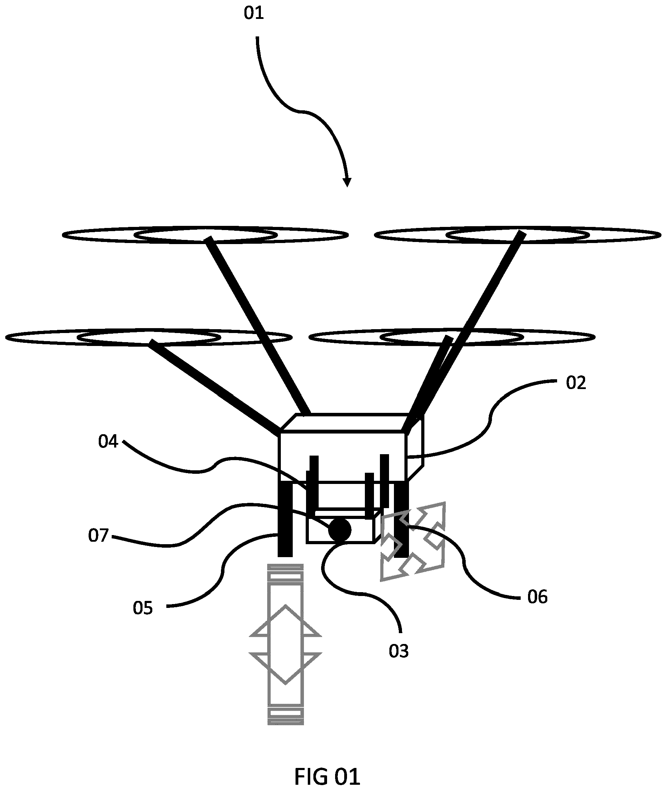

FIG. 01 describes the complete system (01) including the drone (02), suspension system (04), non-invasive velocity measuring device (03) and optional accessories (05), (06) and (07).
FIG. 02 describes how the non-invasive velocity measuring device (03) is attached to the drone (02) using the suspension system (04)..
FIG. 03 A describes in detail the suspension system (04) attaching the non-invasive velocity measuring device (03) to the drone (02).
FIG. 03 B describes an alternate suspension (04) attaching the non-invasive velocity measuring device (03) to the drone (02).
FIG. 04 describes the transmitted (14) and returned (15) microwave signal from the non-invasive measuring device (03) attached to the drone (02).
FIG. 05 describes the vibration signal (17) induced by the drone (02) and the measuring signal (18) from the reflected microwave signal.
FIG. 06 describes the Pitch, Roll and Yaw of the drone.
FIG. 07 describes the effect of the Pitch on the measured signal.
FIG. 08 describes the effect of the Yaw on the measured signal.
FIG. 09 describes a method for measuring a river or open channel surface velocity.
FIG. 10 describes the Roll effect by constant wind speed and direction on where the velocity measurement is taken.
FIG. 11 describes the Roll effect by changing wind speed and direction on where the velocity measurement is taken.
FIG. 12 describes a second method for measuring a river or open channel surface velocity.
FIG. 13 describes a measurement taken by the device (01) in an underground pipe or channel (22).
FIG. 14 describes two methods of taking the surface velocity in an underground pipe or channel (22).
FIG. 15 describes an alternate method which consists in continuously adjusting 3D moving to the non-invasive measuring device (03), using Pitch (19), Roll (20) and Yaw (21) motors.

### DESCRIPTION OF THE INVENTION

The invention relates to a non-invasive method and device for profiling the surface velocity of a river, open channel or underground conduit that is difficult, dangerous or impossible to access by an operator. The equipment (01) comprises a drone (02) carrying a non-invasive velocity measuring device, preferably a microwave Radar device (03). This device is suspended to the drone with a suspension system (4) that drastically reduces any vibrations generated by the drone (02). The drone is piloted by an operator from the riverbank or side of an open channel or from a bridge or from distance over Internet or Satellite control or in autopilot mode. The drone can be flown far enough from piers that can induce flow disturbances. To measure the flow rate of underground conduits (22), the drone can be piloted through an inspection manhole or other access to be flown over the fluid surface to be measured.

The drone is preferably flown at a specific constant distance over the fluid surface, so that it won't be hit by floating debris carried by the fluid. The distance can be anything from close to 0.5 m to several meters depending on the application and the floating debris.

An additional distance measuring device (05) could be carried by the drone as well, but usually the accuracy of the GPS and altimeter from the drone is good enough to position the drone exactly over the fluid surface. The GPS coordinates and altitude could be gathered from the drone (02) by the measuring device (07) associated to the non-invasive velocity measuring device (03) over an appropriate communication link or could be generated by an optional GPS receiver and altimeter included in the measuring device (07) associated to the non-invasive velocity measuring device (03). Modern drones usually can fly accurately at predefined positions which can be repeated over time, avoiding handling the GPS and altimeter data. Over the appropriate communication link or over any suitable command, the device (07) can indicate to the drone (02) that the measurement of a defined spot of the fluid surface is terminated and that the drone (02) can fly to the next defined measuring spot.

Optionally a wind speed and direction device (06) can be used to validate the velocity data or correct them if necessary. Wind velocity information is usually interesting only when the water surface velocity is slow.

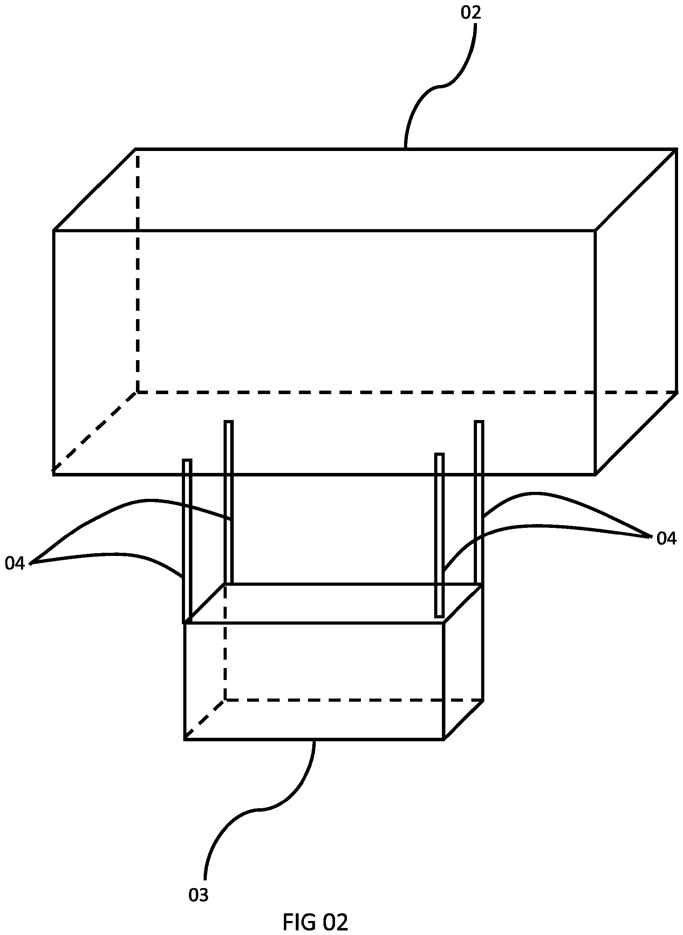

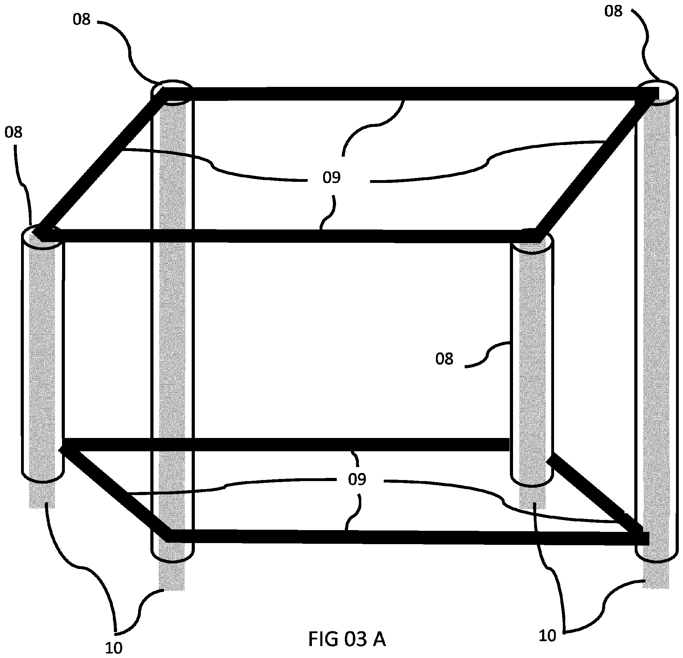

FIG. 02 shows the drone (02) with the velocity measuring device (03) with is attached to the drone using a special suspension device (04). The length of the suspension legs (08) can be of equal length as shown in FIG. 02 or can have different length as shown in FIG. 03 A where the front legs are shorter than the back legs in order to automatically give an angle for the measuring device compared to the water surface and horizontal plane of the drone.

FIG. 03 A shows a detailed view of the suspension system which is made out of lightweight rigid and robust tubed and rods. Usually carbon fibre tubes and rods are preferred. Three or more tubes (08) can be used. They are firmly attached using a mechanical structure made out of roads (09). Within the tubes (08) elastic ropes (10) are used in order to suspend the measuring device (03). The elastic ropes are fixed at the upper end to the suspension system which is attached to the drone (02). At the lower end the ropes (10) are free from the tubes (08) and slightly longer than the tubes. The measuring device will be attached to the elastic ropes. The elasticity of the ropes will be chosen so that the undesired vibrations are absorbed and that the vertical movements remain insignificant.

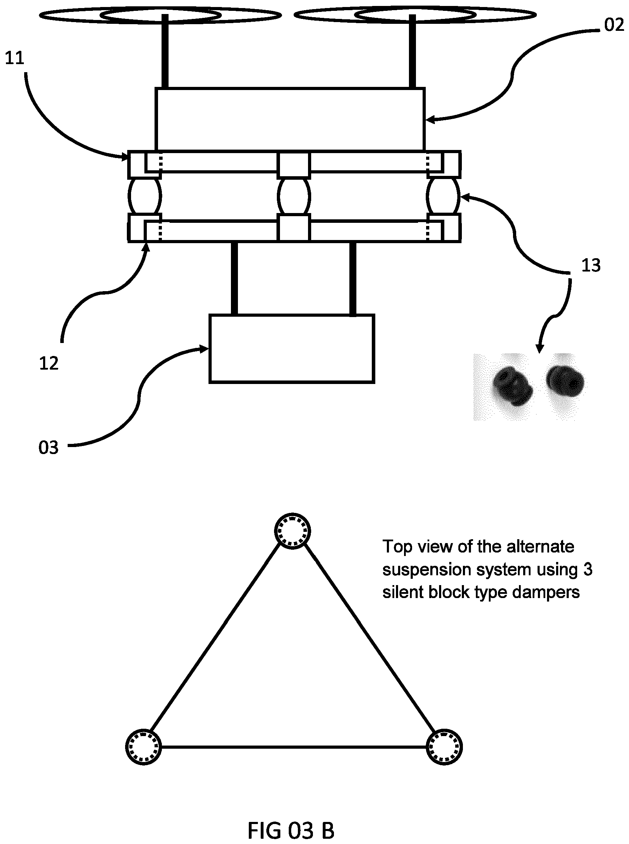

FIG. 03 B shows a detailed view of an alternate suspension system using a lightweight rigid upper plate (11) which is attached to the drone and a lower lightweight rigid plate (12) which is attached to the non-invasive measuring device (03), both plates (11) and (12) are connected with silent block types dampers (13) having the requested elasticity and suspension characteristics for the application.

It is important that the measuring device used to be carried by drones has specific additional features allowing precise measurements. Among those features angle sensors and vibration sensors are required.

Despite the elastic suspension system, mechanical vibrations can be induced by the propellers of the drone (02). Those vibrations are usually at stable frequency which can be interpreted by the measuring system as a Doppler shift frequency representing a velocity measurement that should be discarded, as explained in more details below. The water velocity spectrum is based on the microwave signal returned by the flowing water with a Doppler frequency shift proportional to the water velocity. The microwave radar system can use a horn antenna or patch or patch array antenna.

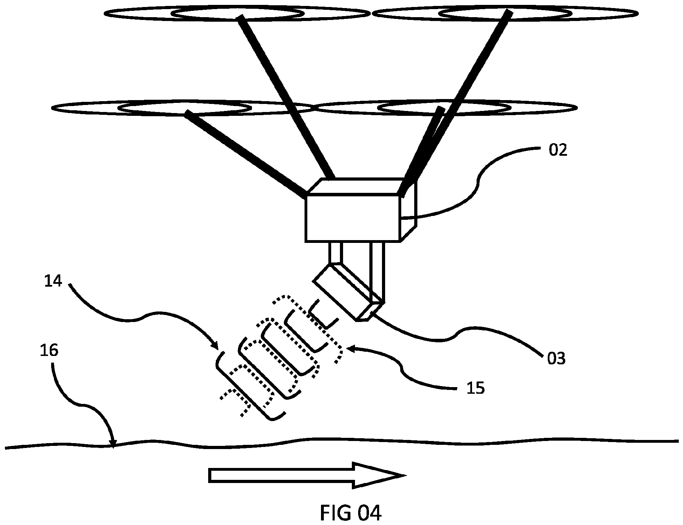

FIG. 04 shows the microwave measuring device (03) suspended to the drone (02) sending a microwave signal (14) out to the water surface (16), said water surface reflecting a return signal (15).

Preferred steps for converting a velocity spectrum into a fluid surface velocity are described in the document EP 3 011 278. They are the following. Each reflected pulse generates a measurement data. The number of reflected pulses in a sequence of measurements will generate a number of discrete data expressed in amplitude as a function of time. The spectrum of data expressed in the temporal domain is transformed into a frequency domain via a discrete Fourier transform (DFT), and preferably, a fast Fourier transform (FFT). Then a Gaussian curve is fitted on the spectrum of discrete data expressed in the frequency domain and the parameters of the Gaussian curve, namely the mean µ and the standard deviation σ respectively represent the measured velocity and the velocity distribution.

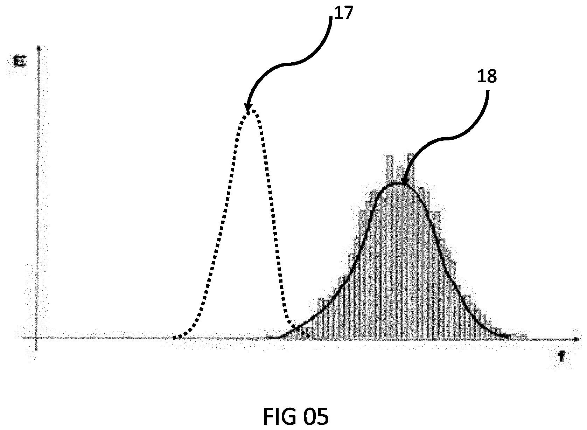

In FIG. 05, the velocity spectrum with its fitted Gaussian curve (18) is illustrated, but the signal resulting from the vibration induced by the propellers (17) is also represented. The Doppler frequency analysis cannot differentiate the signal generated by the vibration and the signal generated by the flowing fluid, both are received as velocity signals and the microprocessor cannot decide which signal to take and will jump between both signals. If the measuring device is equipped with one or more vibration sensor(s) as in the present invention, a correction can be applied to the result. Indeed, vibration sensor is able to identify and eliminate false velocity readings induced by the drone (02) (linked to the vibration induced by the propellers). Such mechanical vibrations can be interpreted as velocity reading(s) (17) being more energetic than the real velocity measurement (18) as shown in Fig 05. This/those sensor(s) will only detect the mechanical vibrations and only the doted Gaussian curve will appear on the analyses from the vibration sensor(s). The same signal analysis approach is taken. Each sample generates a measurement data. The number of samples in a sequence of measurements will generate a number of discrete data expressed in amplitude as a function of time. The spectrum of data expressed in the temporal domain is transformed into a frequency domain via a discrete Fourier transform (DFT), and preferably, a fast Fourier transform (FFT). Then a Gaussian curve is fitted on the spectrum of discrete data expressed in the frequency domain and the parameters of the Gaussian curve, namely the mean µ and the standard deviation σ represent the measured vibration induced velocity and the vibration induced velocity distribution. Having the sole µ and σ from the vibration signal, it can easily mathematically be removed from the combined signal (named also "global signal" in the present invention), leaving the sole fluid velocity information (18).

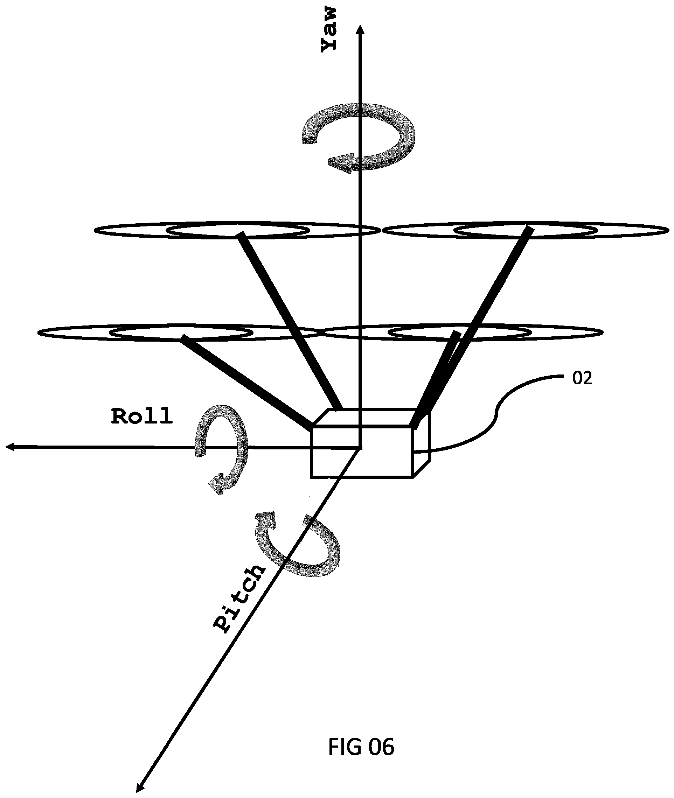

The drone is an unmanned aerial vehicle that will have its Pitch, Roll and Yaw when moving or staying over the fluid surface as shown in FIG. 06.

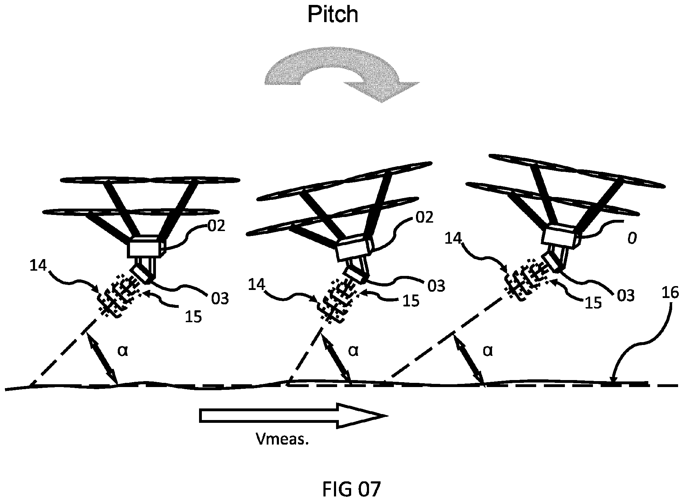

As shown in FIG. 07, the Pitch will modify the elevation angle α from the microwave measuring device suspended, and this angle α has a direct influence on the resulting calculation of the horizontal fluid velocity as the measured velocity needs to be divided by the cosine of that angle α. It is very important that a microwave measuring device carried by a drone is equipped with an adequate measuring device for the Pitch angle as it changes with wind speed and direction. The Roll and Yaw are less important as the Roll doesn't directly influence the measuring result of the fluid velocity, but only slightly shifts the position of the illuminated section of the fluid surface. The Yaw influences directly the measured fluid velocity but the Yaw angle remains usually small and the correction remains small.

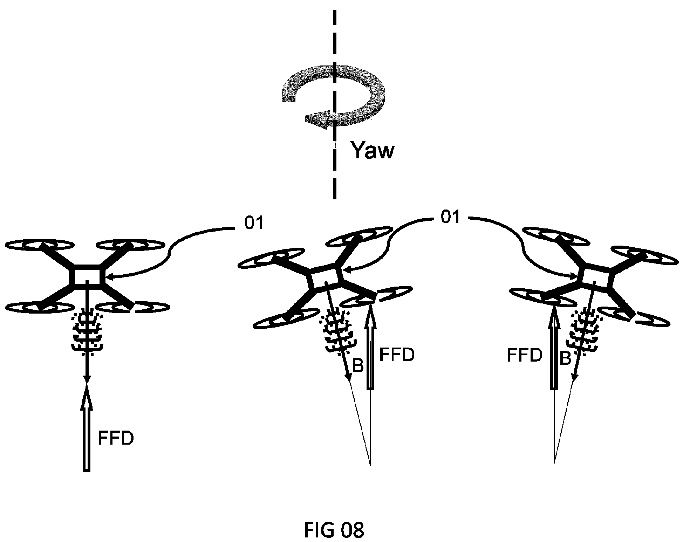

FIG. 08 shows the influence of the Yaw. When the microwave beam is not parallel with the Fluid Flow Direction FFD arrow but has an angle B, the measured velocity needs to be divided by the cosine of the Yaw angle B.

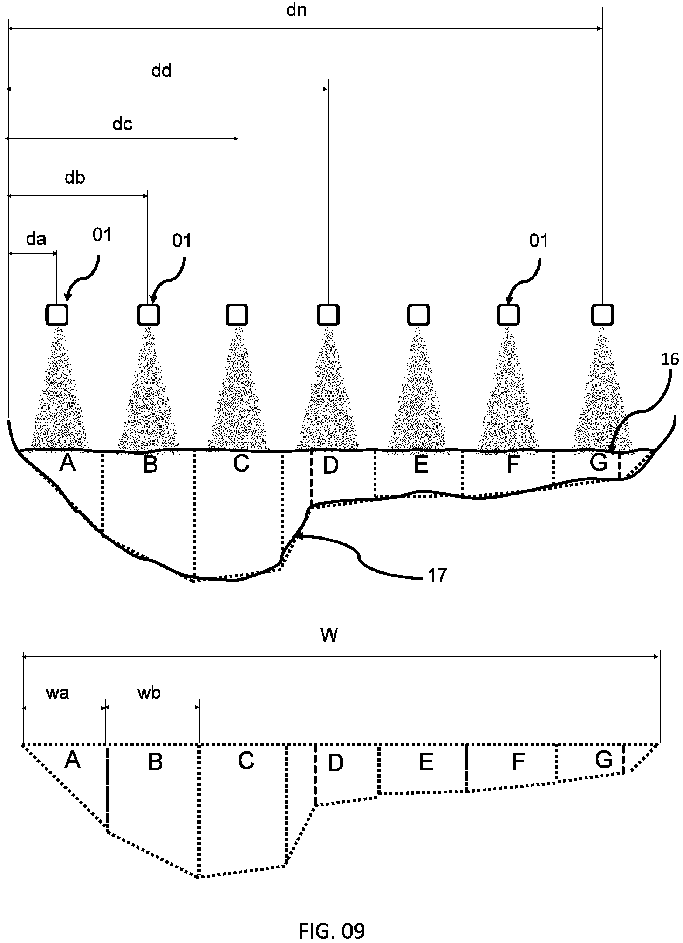

FIG. 09 shows an example of a river section that needs to be measured. The shape of the riverbed (17) has been measured and is stored in the measuring device. The water level combined to the riverbed shape allows to calculate the total width of the surface from the wetted section W, traverse distance from one riverbank to the other. This total width W is divided in a number n of sections having the same width wa, wb, .... wn. Each area is calculated for each section A, B, C... N. In the example shown in FIG. 09, section A will be considered as a triangle, section B, C, E, & F will be considered as a trapeze, section D as a sum of two trapezes and section G as the sum of a trapeze and a triangle.

The device (01) (drone (02) and non-invasive microwave measuring device (03)) is piloted in the way that the microwave beam illuminates the centre part of each section A, B, C ... N, driving the device at distance da, db, dc ... dn from one riverbank.

An alternate method would be to determine sections A, B, C ... N having the same area instead of the same width, and pilot the device (01) in the position to illuminate the centre part of each section of equal area with the microwave beam.

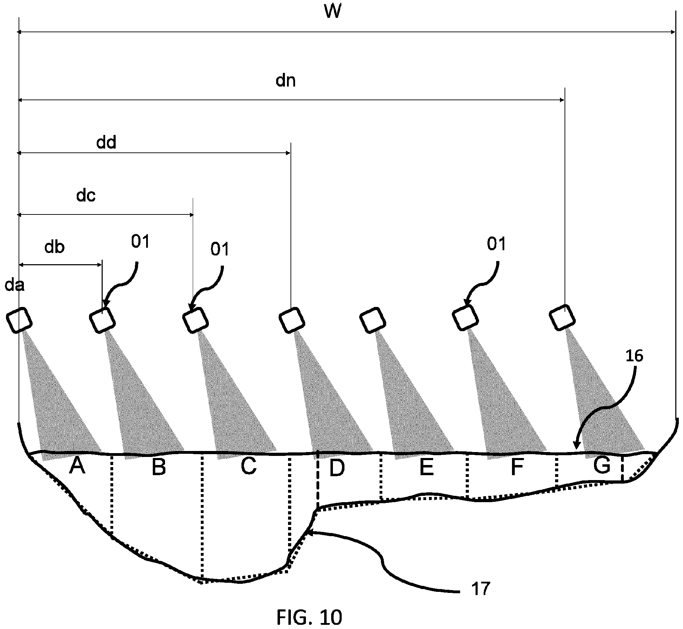

FIG. 10 shows the influence that a constant Roll angle would have on the device (01) position, (distance da, db, dc, ... dn) to illuminate the centre part of each section with the microwave beam (constant Roll angle due to a constant wind speed and direction).

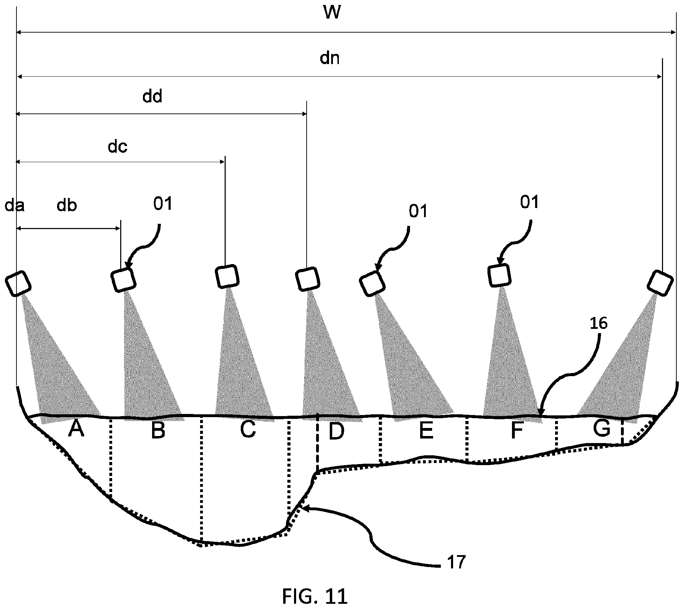

FIG. 11 shows the influence that a changing Roll angle would have on the device (01) position, (distance da, db, dc, ... dn) to illuminate the centre part of each section with the microwave beam (changing Roll angle due to a changing wind speed and direction).

The flowrate for each section N can be calculated following the continuity equation Q_{N} = Vavg _{N} * A_{N} ; were Q_{N} is the flowrate from section N, Vavg _{N} is the average velocity in the section N and A_{N} is the area from section N.
The average velocity of section N, Vavg _{N} can be calculated from the measured surface velocity in the section N, Vmeas. _{N} multiplied by the correction factor of section N, K_{N}.

The correction factor K_{N} from section N, is determined using the width wn of the section N, the average fluid depth in section N and a mathematical model computing those data to calculate the correction factor K_{N}.

To total river flowrate is the sum of all individual flowrates in each section: Q_{TOT} = Q_{A} + Q_{B} + Q_{C} + ... Q_{N}.

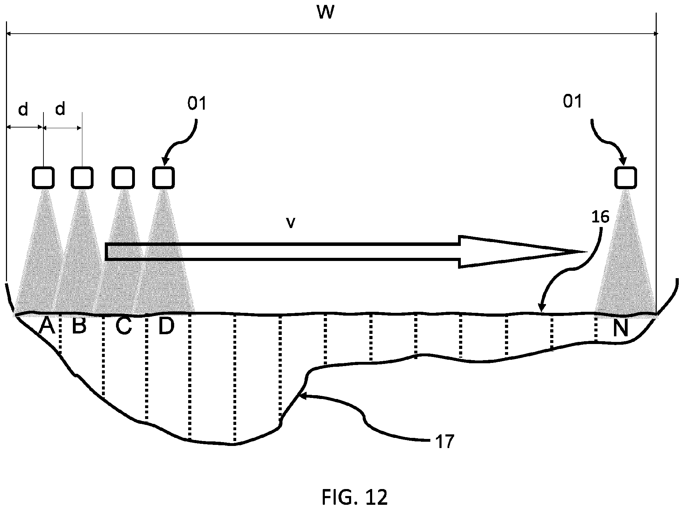

An alternate method is described in FIG. 12 and consists in moving the device (01) (drone (02) with non-invasive microwave measuring system (03)) at constant speed over the hole width W of the river from one riverbank to the other. The speed of the device (01) in meter per second divided by the time taken for a full measurement sequence gives the distance d in meter. The area under this distance d (A, B, C, ... N) can be calculated knowing the shape of the riverbed and the water level.

The flowrate for each section N can be calculated following the continuity equation Q_{N} = Vavg _{N} * A_{N} ; were Q_{N} is the flowrate from section N, Vavg _{N} is the average velocity in the section N and A_{N} is the area from section N.

The average velocity of section N, Vavg _{N} can be calculated from the measured surface velocity in the section N, Vmeas. _{N} multiplied by the correction factor of section N, K_{N}.

The correction factor K_{N} from section N, is determined using the width d of the section N, the average fluid depth in section N and a mathematical model computing those data to calculate the correction factor K_{N}.

The total river flowrate is the sum of all individual flowrates in each section: Q_{TOT} = Q_{A} + Q_{B} + Q_{C} + ... Q_{N}.

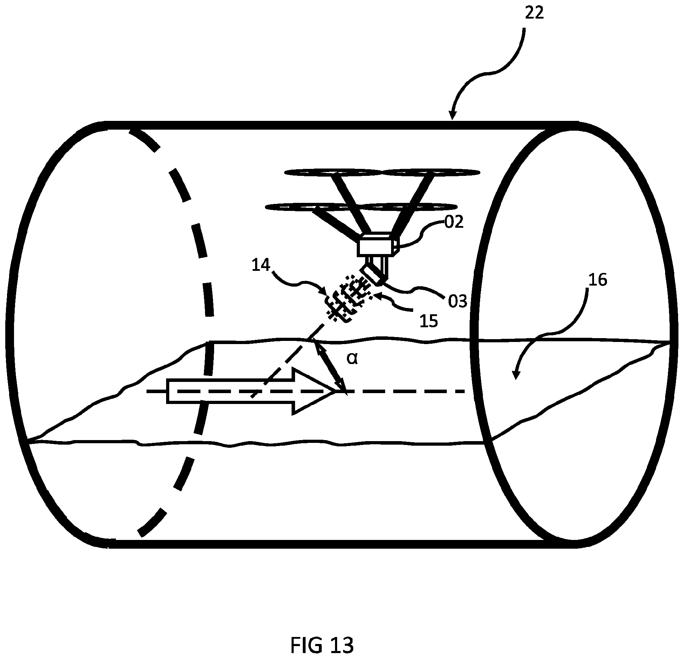

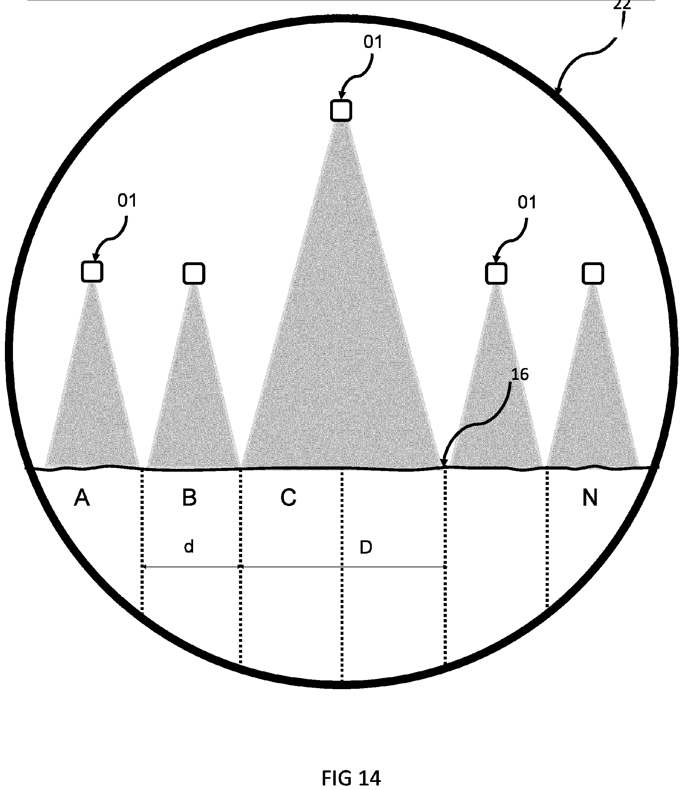

FIG. 13 & 14 are showing the application when the device (01) (drone (02) & non-invasive microwave measuring device (03)) is used in underground channels or pipes (22). Depending on the hydraulic conditions and especially the water level, the device can be piloted to make several individual measurements in individual sections (A, B, C, ... N) of equal width d or take one measurement in the centre of the conduit over a width D.

If the measurement is taken over individual sections, the flowrate for each section N can be calculated following the continuity equation Q_{N} = Vavg _{N} * A_{N} ; were Q_{N} is the flowrate from section N, Vavg _{N} is the average velocity in the section N and A_{N} is the area from section N.

The average velocity of section N, Vavg _{N} can be calculated from the measured surface velocity in the section N, Vmeas. _{N} multiplied by the correction factor of section N, K_{N}.

The correction factor K_{N} from section N, is determined using the width d of the section N, the average fluid depth in section N and a mathematical model computing those data to calculate the correction factor K_{N}.

To total flowrate in the channel is the sum of all individual flowrates in each section: Q_{TOT} = Q_{A} + Q_{B} + Q_{C} + ... Q_{N}.

If only one measurement is taken in the centre of the channel, the Vmeas over the distance D is taken and multiplied by a correction factor K to determine Vavg.

The correction factor K is determined using the shape and dimension of the channel, the water depth and the velocity distribution represented by σ. A mathematical model computes those data and calculates the correction factor K. Q = Vavg. * A, where Q is the flowrate, Vavg. is the average velocity in the wetted area and A is the surface from the wetted area.

In underground channels the drone (02) will be equipped with camera and light to facilitate the pilotage.

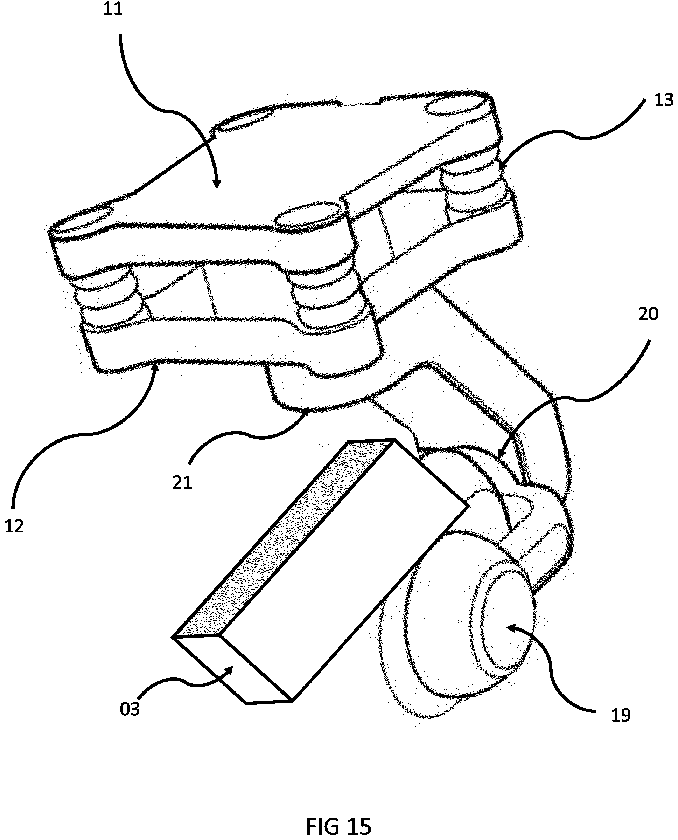

FIG. 15 describes an alternate method avoiding many corrections made on the raw measured surface velocity, which consists in continuously adjusting the 3D moves of the non-invasive measuring device (03), using 3 individual motors, the Pitch motor (19), the Roll motor (20)(20) and the Yaw motor (21), to counteract the effects of Pitch, Roll and Yaw of the drone.

## Claims

1. A non-invasive microwave measuring device (01) for calculating the flow rate of a fluid, the device (01) comprising:
- a non-invasive microwave fluid velocity measuring device (03) comprising a patch antenna or horn antenna to generate a microwave signal (14) that is transmitted at a specific elevation angle α towards the fluid surface (16) and to receive the reflected microwave signal (15) from the fluid surface (16) with a doppler shift frequency, or any other non-invasive fluid velocity measuring device such as laser, optical, acoustic or other;
- a drone (02) to which is suspended the measuring device (03) **characterized in that** it is suspended via a suspension system (04),
said suspension system (04) eliminating vibration noise generated by the drone (02);
and **in that** the non-invasive microwave measuring device (01) further comprises:
- at least one vibration sensor to identify and eliminate false velocity readings induced by the drone (02);
- at least one angle sensor to compensate for Pitch, Roll and Yaw from the drone (02) that influence the fluid surface velocity measurement and determine the final angle from the measuring device (03) towards the fluid surface (16).

2. Device (01) according to claim 1, **characterized in that** the non-invasive microwave fluid velocity measuring device (03) comprises a 3D control system with three motors (19, 20 and 21) able to automatically reposition the non-invasive microwave measuring device (03) in order to compensate for the Pitch, Roll and Yaw of the drone (03).

3. Device (01) according to anyone of previous claims, **characterized in that** the non-invasive microwave fluid velocity measuring device (03) is associated to a measuring device (07) comprising GPS and altimeter sensors.

4. Device (01) according to anyone of previous claims, **characterized in that** the non-invasive microwave fluid velocity measuring device (03) is associated to an interface (07) to capture GPS and altimeter data from the drone (02).

5. Device (01) according to anyone of previous claims, **characterized in that** it comprises a camera and light to facilitate the pilotage especially in underground pipes and channels (22).

6. Device (01) according to anyone of previous claims, **characterized in that** the non-invasive microwave fluid velocity measuring device (03) comprises a recording device to record pictures or videos, together with fluid velocity measurements and/or GPS and altimeter data.

7. Device (01) according to anyone of previous claims, **characterized in that** the non-invasive microwave fluid velocity measuring device (03) comprises a level or distance measuring device (05) and/or a wind speed and direction measurement device (06).

8. Device (01) according to anyone of previous claims, **characterized in that** the suspension device (04) comprises at least three tubes (08) connected to each other by roads (09), the tubes (08) connecting the velocity measuring device (03) to the drone (02), the velocity measuring device (03) being attached to first end of the tubes (08) and the drone (02) being attached to the second end of the tubes (08).

9. Device (01) according to claim 8, **characterized in that** the at least three tubes (08) have different lengths to give an angle for the measuring device (03) compared to the water fluid surface (16) and horizontal plane of the drone (02), angle that is measured by the at least one angle sensor.

10. Device (01) according to claim 8 or 9, **characterized in that** elastic ropes (10) are provided in the tubes (08) and used to suspend the measuring device (03), the upper end of the elastic ropes (10) being connected to the suspension system (04) which is attached to the drone (02) and the lower end of the elastic ropes (10) being attached to the measuring device (03), the lower end of the elastic ropes (10) being free from the tubes (08) and slightly longer than the tubes (08).

11. Device (01) according to claim 10, **characterized in that** the elasticity of the elastic ropes (10) is chosen to absorb the undesired vibrations, with vertical movements of the measuring device (03) remaining insignificant.

12. Device (01) according to anyone of claims 1 to 7, **characterized in that** the suspension device (04) comprises a rigid upper plate (11) connected to the drone (02) and a rigid lower plate (12) connected to the non-invasive measuring device (03), both plates (11) and (12) are connected with silent block types dampers (13).

13. A non-invasive method for measuring velocity measurement and distribution of a fluid (16) flowing through a pipe or channel (22) or in a river or open channel, the method using a non-invasive microwave fluid velocity measuring device (03) suspended to a drone (02) and comprising at least one vibration sensor, said method comprising the steps of:
a. Generating microwave signals (14) by using a patch antenna or horn antenna;
b. Receiving the reflected microwave signals (15) from the flowing fluid surface (16);
c. Generating a number of discrete data expressed in amplitude as function of time from the generated microwave signals and the reflected microwave signals with Doppler frequency shifts;
d. Transforming the spectrum of data expressed in the temporal domain into a frequency domain via a Fourier transform to fit a first Gaussian curve;
e. Determining the global measured velocity (main µ) and the global velocity distribution (standard deviation σ) via the first Gaussian curve;
f. Measuring the mechanical vibrations of the drone during the steps (a) and (b) of generating and receiving signals, to determine a sequence of vibration data being measured by the vibration sensor;
g. Generating, from the vibration data, a number of discrete data expressed in amplitude as a function of time;
h. Transforming the spectrum of vibration data expressed in the temporal domain into a frequency domain via a Fourier transform to fit a second Gaussian curve;
i. Determining the measured vibration induced velocity (mean µ) and the vibration induced velocity distribution (standard deviation σ) via the second Gaussian curve.
j. Applying a correction to the global measured velocity and the global velocity distribution obtained in step (e) by subtracting the measured vibration induced velocity and vibration induced velocity distribution obtained in step (j) in order to eliminate the vibrations of the drone (02) in the calculation of real velocity measurement and real velocity distribution of the fluid.

14. Method according to claim 13, **characterized in that** the fluid surface velocity is determined from the generated microwave signals and the reflected microwave signals with Doppler frequency shifts and is compensated for Pitch, Roll and Yaw from the drone (02) by taking into account the data measured by at least one angle sensor.

## Patentansprüche

1. Eine nicht-invasive Mikrowellenmessvorrichtung (01) zum Berechnen der Durchflussmenge eines Fluids, die Vorrichtung (01) umfassend:
- eine nicht-invasive Mikrowellen-Fluidgeschwindigkeitsmessvorrichtung (03), umfassend eine Patchantenne oder eine Hornantenne zur Erzeugung eines Mikrowellensignals (14), das unter einem bestimmten Elevationswinkel α zu der Fluidoberfläche (16) übertragen wird, und um das von der Fluidoberfläche (16) reflektierte Mikrowellensignal (15) mit einer Dopplerverschiebungsfrequenz zu empfangen, oder eine beliebige andere nicht-invasive Fluidgeschwindigkeitsmessvorrichtung, wie beispielsweise Laser, optisch, akustisch oder sonstige;
- eine Drohne (02), an der die Messvorrichtung (03) aufgehängt ist, **dadurch gekennzeichnet, dass** sie mittels eines Aufhängungssystems (04) aufgehängt ist,
wobei das besagte Aufhängungssystem (04) die von der Drohne (02) erzeugten Schwingungsgeräusche eliminiert;
und dass die nicht-invasive Mikrowellenmessvorrichtung (01) ferner Folgendes umfasst:
- mindestens einen Schwingungssensor zum Identifizieren und Eliminieren falscher Geschwindigkeitsmessungen, die durch die Drohne (02) induziert werden;
- mindestens einen Winkelsensor zum Kompensieren von Nick-, Roll- und Gierbewegungen der Drohne (02), die die Fluidoberflächen-Geschwindigkeitsmessung beeinflussen, und zum Bestimmen des endgültigen Winkels von der Messvorrichtung (03) zu der Fluidoberfläche (16).

2. Vorrichtung (01) nach Anspruch 1, **dadurch gekennzeichnet, dass** die nicht-invasive Mikrowellen-Fluidgeschwindigkeitsmessvorrichtung (03) ein 3D-Steuerungssystem mit drei Motoren (19, 20 und 21) umfasst, die in der Lage sind, die nicht-invasive Mikrowellenmessvorrichtung (03) automatisch neu zu positionieren, um Nicken, Rollen und Gieren der Drohne (03) auszugleichen.

3. Vorrichtung (01) nach irgendeinem der vorherigen Ansprüche, **dadurch gekennzeichnet, dass** die nicht-invasive Mikrowellen-Fluidgeschwindigkeitsmessvorrichtung (03) mit einer GPS- und Höhenmesssensoren umfassenden Messvorrichtung (07) assoziiert ist.

4. Vorrichtung (01) nach irgendeinem der vorherigen Ansprüche, **dadurch gekennzeichnet, dass** die nicht-invasive Mikrowellen-Fluidgeschwindigkeitsmessvorrichtung (03) mit einer Schnittstelle (07) assoziiert ist, um GPS- und Höhenmessdaten von der Drohne (02) zu erfassen.

5. Vorrichtung (01) nach irgendeinem der vorherigen Ansprüche, **dadurch gekennzeichnet, dass** sie eine Kamera und ein Licht umfasst, um das Pilotieren insbesondere in unterirdischen Leitungen und Kanälen (22) zu erleichtern.

6. Vorrichtung (01) nach Irgendeinem der vorherigen Ansprüche, **dadurch gekennzeichnet, dass** die nicht-invasive Mikrowellen-Fluidgeschwindigkeitsmessvorrichtung (03) eine Aufzeichnungsvorrichtung umfasst, um Bilder oder Videos zusammen mit Fluidgeschwindigkeitsmessungen und/oder GPS- und Höhenmessdaten aufzuzeichnen.

7. Vorrichtung (01) nach irgendeinem der vorherigen Ansprüche, **dadurch gekennzeichnet, dass** die nicht-invasive Mikrowellen-Fluidgeschwindigkeitsmessvorrichtung (03) eine Niveau- oder Abstandsmessvorrichtung (05) und/oder eine Windgeschwindigkeits- und richtungsmessvorrichtung (06) umfasst.

8. Vorrichtung (01) nach irgendeinem der vorherigen Ansprüche, **dadurch gekennzeichnet, dass** die Aufhängevorrichtung (04) mindestens drei Rohre (08), die durch Straßen (09) miteinander verbunden sind, umfasst, wobei die Rohre (08) die Geschwindigkeitsmessvorrichtung (03) mit der Drohne (02) verbinden, wobei die Geschwindigkeitsmessvorrichtung (03) an dem ersten Ende der Rohre (08) befestigt ist und die Drohne (02) an dem zweiten Ende der Rohre (08) befestigt ist.

9. Vorrichtung (01) nach Anspruch 8, **dadurch gekennzeichnet, dass** die mindestens drei Rohre (08) unterschiedliche Längen aufweisen, um einen Winkel für die Messvorrichtung (03) gegenüber der Wasserfluidoberfläche (16) und der horizontalen Ebene der Drohne (02) zu ergeben, der von dem mindestens einen Winkelsensor gemessen wird.

10. Vorrichtung (01) nach Anspruch 8 oder 9, **dadurch gekennzeichnet, dass** in den Rohren (08) elastische Seile (10), an denen die Messvorrichtung (03) aufgehängt ist, bereitgestellt sind, wobei das obere Ende der elastischen Seile (10) mit dem Aufhängungssystem (04), das an der Drohne (02) angebracht ist, verbunden ist, und das untere Ende der elastischen Seile (10) an der Messvorrichtung (03) angebracht ist, wobei das untere Ende der elastischen Seile (10) frei von den Rohren (08) und etwas länger als die Rohre (08) ist.

11. Vorrichtung (01) nach Anspruch 10, **dadurch gekennzeichnet, dass** die Elastizität der elastischen Seile (10) gewählt ist, um die unerwünschten Schwingungen zu absorbieren, wobei vertikale Bewegungen der Messvorrichtung (03) unbedeutend bleiben.

12. Vorrichtung (01) nach irgendeinem der Ansprüche 1 bis 7, **dadurch gekennzeichnet, dass** die Aufhängevorrichtung (04) eine starre obere Platte (11), die mit der Drohne (02) verbunden ist, und eine starre untere Platte (12), die mit der nichtinvasiven Messvorrichtung (03) verbunden ist, umfasst, wobei beide Platten (11) und (12) mit Dämpfern (13) vom Typ Silentblock verbunden sind.

13. Ein nicht-invasives Verfahren zum Messen von Geschwindigkeit und Verteilung eines Fluids (16), das durch ein Rohr oder einen Kanal (22) oder in einem Fluss oder offenen Kanal strömt, wobei das Verfahren eine nicht-invasive Mikrowellen-Fluidgeschwindigkeitsmessvorrichtung (03) verwendet, die an einer Drohne (02) aufgehängt ist und umfassend mindestens einen Schwingungssensor, das besagte Verfahren umfassend die folgenden Schritte:
a. Erzeugen von Mikrowellensignalen (14) unter Verwendung einer Patchantenne oder Hornantenne;
b. Empfangen der reflektierten Mikrowellensignale (15) von der Fluidströmungsoberfläche (16);
c. Erzeugen einer Reihe von separaten Daten, ausgedrückt in Amplitude abhängig von Zeit, aus den erzeugten Mikrowellensignalen und den reflektierten Mikrowellensignalen mit Dopplerfrequenzverschiebungen;
d. Umwandeln des Spektrums von im Zeitbereich ausgedrückten Daten in einen Frequenzbereich mittels einer Fourier-Transformation zum Anpassen an eine erste gaußsche Kurve;
e. Bestimmen der globalen gemessenen Geschwindigkeit (Haupt-µ) und der globalen Geschwindigkeitsverteilung (Standardabweichung σ) mittels der ersten gaußschen Kurve;
f. Messen der mechanischen Schwingungen der Drohne während der Schritte (a) und (b) eines Erzeugens und Empfangens von Signalen, um eine Abfolge von Schwingungsdaten, die von dem Schwingungssensor gemessen werden, zu bestimmen;
g. Erzeugen, aus den Schwingungsdaten, einer Reihe von separaten Daten, ausgedrückt in Amplitude abhängig von Zeit;
h. Umwandeln des Spektrums von im Zeitbereich ausgedrückten Schwingungsdaten in einen Frequenzbereich mittels einer Fourier-Transformation zum Anpassen an eine zweite gaußsche Kurve;
i. Bestimmen der gemessenen schwingungsinduzierten Geschwindigkeit (Mittelwert µ) und der schwingungsinduzierten Geschwindigkeitsverteilung (Standardabweichung σ) mittels der zweiten gaußschen Kurve;
j. Anwenden einer Korrektur auf die in Schritt (e) erlangte globale gemessene Geschwindigkeit und die globale Geschwindigkeitsverteilung durch Subtrahieren der in Schritt (j) erlangten gemessenen schwingungsinduzierten Geschwindigkeit und schwingungsinduzierten Geschwindigkeitsverteilung, um die Schwingungen der Drohne (02) bei der Berechnung der tatsächlichen Geschwindigkeitsmessung und der tatsächlichen Geschwindigkeitsverteilung des Fluids zu eliminieren.

14. Verfahren nach Anspruch 13, **dadurch gekennzeichnet, dass** die Fluidoberflächengeschwindigkeit aus den erzeugten Mikrowellensignalen und den reflektierten Mikrowellensignalen mit Dopplerfrequenzverschiebungen bestimmt und für Nicken, Rollen und Gieren der Drohne (02) kompensiert wird, indem die von mindestens einem Winkelsensor gemessenen Daten berücksichtigt werden.

## Revendications

1. Dispositif de mesure non invasif à micro-ondes (01) permettant de calculer le débit d'un fluide, le dispositif (01) comprenant :
- un dispositif de mesure non invasif à micro-ondes de vitesse de fluide (03) comprenant une antenne planaire ou une antenne cornet pour générer un signal micro-onde (14) qui est transmis à un angle d'élévation spécifique α vers la surface de fluide (16) et pour recevoir le signal micro-onde réfléchi (15) provenant de la surface de fluide (16) avec un décalage doppler de fréquence, ou tout autre dispositif de mesure non invasif de vitesse de fluide tel qu'un dispositif de mesure laser, optique, acoustique ou autre ;
- un drone (02) auquel est suspendu le dispositif de mesure (03), **caractérisé en ce qu'**il est suspendu par l'intermédiaire d'un système de suspension (04),
ledit système de suspension (04) éliminant un bruit de vibration généré par le drone (02) ; et
**en ce que** le dispositif de mesure non invasif à micro-ondes (01) comprend en outre :
- au moins un capteur de vibrations destiné à identifier et éliminer les lectures de vitesse erronées induites par le drone (02) ;
- au moins un capteur d'angle destiné à compenser le tangage, le roulis et le lacet du drone (02) qui influencent la mesure de vitesse de surface de fluide et à déterminer l'angle final du dispositif de mesure (03) vers la surface de fluide (16).

2. Dispositif (01) selon la revendication 1, **caractérisé en ce que** le dispositif de mesure non invasif à micro-ondes de vitesse de fluide (03) comprend un système de commande 3D avec trois moteurs (19, 20 et 21) aptes à repositionner automatiquement le dispositif de mesure non invasif à micro-ondes (03) afin de compenser le tangage, le roulis et le lacet du drone (03).

3. Dispositif (01) selon l'une quelconque des revendications précédentes, **caractérisé en ce que** le dispositif de mesure non invasif à micro-ondes de vitesse de fluide (03) est associé à un dispositif de mesure (07) comprenant des capteurs GPS et altimétriques.

4. Dispositif (01) selon l'une quelconque des revendications précédentes, **caractérisé en ce que** le dispositif de mesure non invasif à micro-ondes de vitesse de fluide (03) est associé à une interface (07) pour capturer des données GPS et altimétriques provenant du drone (02).

5. Dispositif (01) selon l'une quelconque des revendications précédentes, **caractérisé en ce qu'**il comprend une caméra et une lumière pour faciliter le pilotage notamment dans des canalisations et canaux souterrains (22).

6. Dispositif (01) selon l'une quelconque des revendications précédentes, **caractérisé en ce que** le dispositif de mesure non invasif à micro-ondes de vitesse de fluide (03) comprend un dispositif d'enregistrement destiné à enregistrer des images ou des vidéos, conjointement avec des mesures de vitesse de fluide et/ou des données GPS et altimétriques.

7. Dispositif (01) selon l'une quelconque des revendications précédentes, **caractérisé en ce que** le dispositif de mesure non invasif à micro-ondes de vitesse de fluide (03) comprend un dispositif de mesure de niveau ou de distance (05) et/ou un dispositif de mesure de vitesse et de direction du vent (06).

8. Dispositif (01) selon l'une quelconque des revendications précédentes, **caractérisé en ce que** le système de suspension (04) comprend au moins trois tubes (08) reliés entre eux par des voies (09), les tubes (08) reliant le dispositif de mesure de vitesse (03) au drone (02), le dispositif de mesure de vitesse (03) étant fixé à la première extrémité des tubes (08) et le drone (02) étant fixé à la deuxième extrémité des tubes (08).

9. Dispositif (01) selon la revendication 8, **caractérisé en ce que** lesdits au moins trois tubes (08) ont des longueurs différentes pour donner un angle au dispositif de mesure (03) par rapport à la surface de fluide d'eau (16) et au plan horizontal du drone (02), lequel angle est mesuré par ledit au moins un capteur d'angle.

10. Dispositif (01) selon la revendication 8 ou 9, **caractérisé en ce que** des cordes élastiques (10) sont fournies dans les tubes (08) et utilisées pour suspendre le dispositif de mesure (03), l'extrémité supérieure des cordes élastiques (10) étant reliée au système de suspension (04) qui est fixé au drone (02) et l'extrémité inférieure des cordes élastiques (10) étant fixée au dispositif de mesure (03), l'extrémité inférieure des cordes élastiques (10) étant libre par rapport aux tubes (08) et légèrement plus longue que les tubes (08).

11. Dispositif (01) selon la revendication 10, **caractérisé en ce que** l'élasticité des cordes élastiques (10) est choisie pour absorber les vibrations indésirables, avec les mouvements verticaux du dispositif de mesure (03) restant insignifiants.

12. Dispositif (01) selon l'une quelconque des revendications 1 à 7, **caractérisé en ce que** le système de suspension (04) comprend une plaque supérieure rigide (11) reliée au drone (02) et une plaque inférieure rigide (12) reliée au dispositif de mesure non invasif (03), les deux plaques (11) et (12) étant reliées à des amortisseurs de type support élastique (13).

13. Procédé non invasif permettant de mesurer une vitesse et une distribution de vitesses d'un fluide (16) s'écoulant dans une canalisation ou un canal (22) ou dans une rivière ou un canal ouvert, le procédé utilisant un dispositif de mesure non invasif à micro-ondes de vitesse de fluide (03) suspendu à un drone (02) et comprenant au moins un capteur de vibrations, ledit procédé comprenant les étapes de :
a. générer des signaux micro-ondes (14) à l'aide d'une antenne planaire ou d'une antenne cornet ;
b. recevoir les signaux micro-ondes réfléchis (15) à partir de la surface de fluide en écoulement (16) ;
c. générer un nombre de données discrètes exprimées en amplitude en fonction du temps à partir des signaux micro-ondes générés et des signaux micro-ondes réfléchis avec des décalages Doppler de fréquence;
d. transformer le spectre de données exprimées dans le domaine temporel en un domaine de fréquence par l'intermédiaire d'une transformée de Fourier afin d'ajuster une première courbe gaussienne ;
e. déterminer la vitesse mesurée globale (µ principale) et la distribution de vitesse globale (écart-type σ) par l'intermédiaire de la première courbe gaussienne ;
f. mesurer les vibrations mécaniques du drone au cours des étapes (a) et (b) de génération et de réception de signaux, afin de déterminer une séquence de données de vibrations mesurées par le capteur de vibrations ;
g. générer, à partir des données de vibrations, un nombre de données discrètes exprimées en amplitude en fonction du temps ;
h. transformer le spectre de données de vibrations exprimées dans le domaine temporel en un domaine de fréquence par l'intermédiaire d'une transformée de Fourier afin d'ajuster une deuxième courbe gaussienne ;
i. déterminer la vitesse induite par les vibrations mesurées (µ moyenne) et la distribution de vitesse induite par les vibrations (écart-type σ) par l'intermédiaire de la deuxième courbe gaussienne ; et
j. appliquer une correction à la vitesse mesurée globale et à la distribution de vitesse globale obtenues à l'étape e), en soustrayant la vitesse induite par les vibrations mesurées et la distribution de vitesse induite par les vibrations obtenues à l'étape (j) afin d'éliminer les vibrations du drone (02) dans le calcul d'une mesure de vitesse réelle et d'une distribution de vitesse réelle du fluide.

14. Procédé selon la revendication 13, **caractérisé en ce que** la vitesse de surface de fluide est déterminée à partir des signaux micro-ondes générés et des signaux micro-ondes réfléchis avec des décalages Doppler de fréquence, et est compensée en termes de tangage, de roulis et de lacet du drone (02) en prenant en compte les données mesurées par au moins un capteur d'angle.
